# EUROPÄISCHE PATENTANMELDUNG

(11) **EP 1 710 073 A2**
(43) Veröffentlichungstag der Anmeldung: **11.10.2006**
(21) Anmeldenummer: 06005008.5
(22) Anmeldetag: 11.03.2006
(51) Int. Cl.: B29C 51/16

(54) **Verfahren zum Überführen eines Etiketts in das Unterteil eines Thermoformwerkzeuges zum Herstellen eines etikettierten Behälters und Vorrichtung zur Durchführung des Verfahrens**

(30) Priorität: 09.04.2005 DE 102005016312
(71) Anmelder: ILLIG Maschinenbau GmbH & Co. KG, 74081 Heilbronn (DE)
(72) Erfinder: Karolus, Andreas, 74646 Bruchsal (DE); Endres, Joachim, 74193 Schwaigern (DE)

(57) **Zusammenfassung**

Durch die Erfindung wird ein Verfahren zum Überführen eines Etiketts (1) von einem Etikettenstapel (2) oder einer Stanzeinrichtung in das Unterteil (16) eines ein- oder mehrreihigen Formwerkzeuges zum Herstellen eines etikettierten Behälters (19) aus einer erwärmten thermoplastischen Kunststofffolie (20) in der Weise verbessert, dass das Vorformen und Übergeben sehr rasch und störungsunanfällig erfolgen kann und eine hohe Taktzahl des Formwerkzeuges möglich ist. Es kann bei runder, rechteckiger oder bombierter Gestalt der Behälter (19) angewendet werden. Auch das Anformen eines Bodenetiketts ist möglich.

Dies wird dadurch erreicht, dass das von einer Greifeinrichtung (26) erfasste Etikett (1) im Zusammenwirken mit einer Vorformeinrichtung (8) im wesentlichen u-förmig vorgeformt, eine Überführungseinrichtung (3) in das vorgeformte Etikett (1) eingeführt, das Etikett teilweise auf die Überführungseinrichtung (3) aufgebracht wird und danach die nicht anliegenden Schenkel des Etiketts (1) an die Überführungseinrichtung (3) angelegt und festgehalten werden. Danach legt die Überführungseinrichtung (3) die Etiketten (1) in das Formwerkzeug ein.

## Beschreibung

Die Erfindung betrifft ein Verfahren zum Überführen eines Etiketts von einem Etikettenstapel oder einer Stanzeinrichtung in das Unterteil eines Formwerkzeuges zum Herstellen eines etikettierten Behälters aus einer erwärmten thermoplastischen Kunststofffolie nach der Gattung des Hauptanspruches und eine Vorrichtung zur Durchführung des Verfahrens. Solche Formwerkzeuge werden in die Formstation einer Thermoformmaschine eingesetzt, die formend oder auch formend und stanzend ausgebildet sein kann. Falls die Formstation nur formend arbeitet und in nachfolgenden Stationen das Füllen und Verschließen der geformten Behälter stattfindet werden solche Maschinen als Verpackungsmaschinen bezeichnet.

Aus der DE 41 37 982 A1 ist es bekannt, Etiketten von einem Etikettenstapel mittels einer Saugplatte zu entnehmen und in eine Überführungseinrichtung hinein vorzuformen, die dann vor das Unterteil eines Formwerkzeuges verschoben wird. Dort erfolgt die Überführung der Etiketten durch Umstülpen in die Formnester des Unterteils. Nachteilig ist bei dieser Art der Etikettenhandhabung, dass immer ein Bodenteil zum Ansaugen des Etiketts nötig ist, sodass immer am Boden etikettierte Behälter entstehen. Entscheidend für die Optik ist aber die Etikettierung der Seitenwand der Behälter. Es wird also unnötig viel Etikettenmaterial am Boden erforderlich. Das Verfahren eignet sich auch nicht für die vollflächige Etikettierung runder Behälter, bedingt durch die Abwicklung des Etiketts. Bei rechteckigen - meist verrundeten - Behältern könnte man zwar durch eine entsprechende Gestalt des Etiketts eine vollflächige Etikettierung erreichen, doch ergeben sich an den Ecken vier Nahtstellen, an denen die große Gefahr eines Versatzes, eines Spaltes oder einer Überdeckung besteht.

Weiterhin ist es aus der DE 25 17 534 A1 bekannt, Etiketten von einem Stapel mittels eines Greifers zu entnehmen, diese um 90° zu drehen, zu einem Aufnahmedorn zu führen, um den sich drehenden Aufnahmedorn zu wickeln und so vorzuformen. Dieses vorgeformte Etikett wird dann nach dem axialen Verschieben des Aufnahmedornes in das Formnest eingelegt und - nach dem Schwenken des Unterteils des Formwerkzeuges - beim Tiefziehen mit der erwärmten Kunststofffolie verbunden. Mit diesem Verfahren lassen sich zwar runde Behälter formen, jedoch keine rechteckigen oder bombierten. Eine teilweise Bodenetikettierung ist nicht möglich. Auch eine zweireihige Herstellung etikettierter Behälter ist wegen den Platzproblemen - Kollision mit der Folienbahn - nicht machbar.

Ebenfalls bekannt ist aus der DE 70 38 940 U1 eine Vorrichtung, bei der Etiketten von einem Etikettenstapel mittels einer Greifeinrichtung erfasst, mittels einer Formeinrichtung vorgeformt und in eine Überführungseinrichtung eingelegt werden. Diese Überführungseinrichtung schwenkt zu einer Übergabestation, in der mit einer weiteren Übergabeeinrichtung die vorgeformten Etiketten in das Formnest eines schwenkbaren Werkzeugunterteils eingelegt werden. Dieses Verfahren ist störungsanfällig, weil die vorgeformten Etiketten, nur am Außenrand gehalten, um 180° geschwenkt werden müssen, was relativ langsam erfolgen muss, um eine Verschiebung der Etiketten zu vermeiden. Die Taktzahl ist also beschränkt. Auch mit diesem Verfahren ist eine Bodenetikettierung zwangsläufig gegeben. Runde etikettierte Behälter sind so nicht herstellbar. Bei rechteckigen Behältern entstehen bei der Rundumetikettierung Probleme an den vier Nahtstellen.

Aus der DE 103 31 519 A1 ist eine Vorform- und Übergabeeinrichtung für Etiketten bekannt, die in ein Spritzgusswerkzeug eingelegt werden. Die Vorformeinrichtung besteht aus einem Teil mit einer kegelstumpfförmigen Ausnehmung mit einem seitlichen Schlitz, in den das Etikett eingeführt wird. Das Etikett rollt sich dann an der Innenform entlang und nimmt eine Vorform an. Von dort aus wird das Etikett durch einen Dorn oder einen Kern (als Pos. 303 bezeichnet) entnommen, der dann das Übergeben in das Formwerkzeug übernimmt. Diese Art der Vorformung ist nur möglich bei runden Behältern, bernimmt. Diese Art der Vorformung ist nur möglich bei runden Behältern, weil ein Rollen der Etiketten erforderlich ist. Dieses Verfahren ist zudem störungsanfällig, weil das Rollen durch Schieben am Etikett erfolgen muss und bei dünnen Etiketten problematisch ist. Eine teilweise Bodenetikettierung ist nicht möglich. Die mögliche Taktzahl bei der gezeigten Spritzgussmaschine ist relativ niedrig.

Aus der EP 0 678 372 A1 insbesondere Figur 5 ist eine Vorrichtung bekannt, mit der Etiketten von einem Stapel entnommen, auf einer Zwischenablage abgelegt, dort von einer Vorformeinrichtung aufgenommen, im Zusammenwirken mit einer Vorformeinrichtung u-förmig verformt, dann mit einer Übergabeeinrichtung aus der Vorformeinrichtung entnommen und in die Tiefziehform überführt werden. Das Etikett wird also insgesamt dreimal aufgenommen und dreimal abgesetzt, was jedes mal die Gefahr von Störungen mit sich bringt.

Aus der DE 696 15 150 T2 ist eine Vorrichtung bekannt, bei der Etiketten auf ein weibliches Vorformwerkzeug flach aufgelegt und dann in dieses hinein mit einem Vorformstempel vorgeformt werden. Dieser Vorformstempel überführt die so vorgeformten Etiketten in das Tiefziehwerkzeug. Da die Abwicklung des flachen Etiketts größer ist als der Durchmesser des fertigen Behälters ist dieses Verfahren nur bei einreihiger Fahrweise anwendbar, da die Vorformenwerkzeuge einen großen Abstand einnehmen würden, bedingt durch die Abwicklung.

Der Erfindung liegt die Aufgabe zugrunde, das Verfahren so durchzuführen, dass es bei einreihigen und mehrreihigen Formwerkzeugen Anwendung finden kann, wobei die Form der Behälter rund, rechteckig oder bombiert sein kann. Das Verfahren sollte ein sehr rasches und störungsunanfälliges Bestücken des Formwerkzeuges mit Etiketten ermöglichen. Das Anformen eines Etiketts in einem Teilbereich des Bodens des Behälters sollte möglich sein.

Zur Lösung der Aufgabe werden die Merkmale des Anspruches 1 vorgeschlagen. Die Vorrichtung zum Durchführen des Verfahrens ist durch die Merkmale des Anspruches 14 gekennzeichnet.

Weiterbildungen der Erfindung sind Merkmale der jeweiligen Unteransprüche. Die Ausführungsbeispiele der Erfindung sind anhand der schematischen Zeichnungen näher beschrieben. Es zeigen:
- Figur 1 - 4: verschiedene Verfahrensstufen beim Vorformen eines Etiketts.
- Figur 5: einen Querschnitt durch eine andere Gestalt der Vorformeinrichtung.
- Figur 6: eine Draufsicht auf eine Formstation einer Tiefziehmaschine oder Verpackungsmaschine, bei der die Vorrichtung zum Überführen der Etiketten aus zwei Vorformeinheiten mit je zwei Überführungseinrichtungen zum Zuführen in zwei Unterteile eines Formwerkzeuges besteht.
- Figur 7: einen Schnitt durch die Formstation einer Tiefzieh- bzw. Verpackungsmaschine gemäß Figur 6, bei der die beiden Unterteile jedoch 90° geschwenkt sind gegenüber der Draufsicht nach Figur 6.
- Figur 8 bis 18: verschiedene Verfahrensstufen beim Vorformen und Übergeben von Etiketten bei einem zweireihigen Formwerkzeug und zwei Unterteilen.
- Figur 19: einen Querschnitt durch die Vorrichtung bei Einsatz eines Nachfüllmagazins.
- Figur 20: eine Draufsicht auf ein Messermagazin.
- Figur 21 und 22: einer Variante einer Gestaltung der Vorformeineinrichtung.

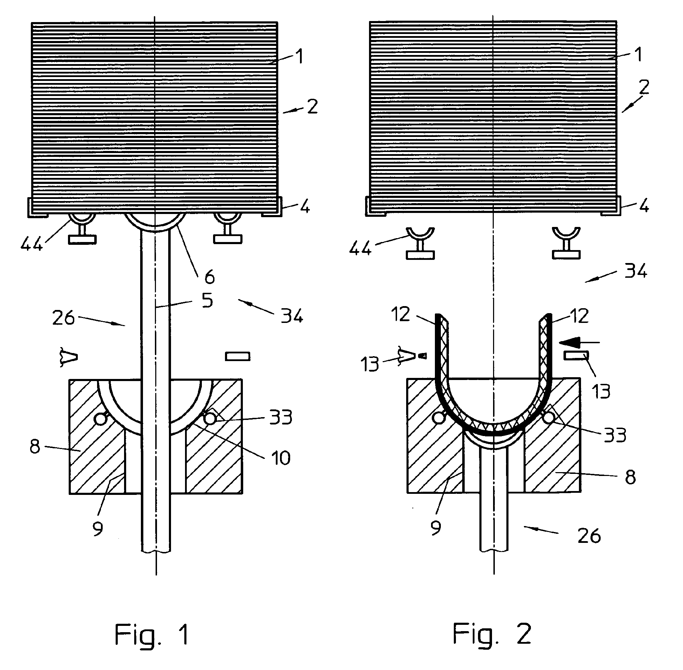

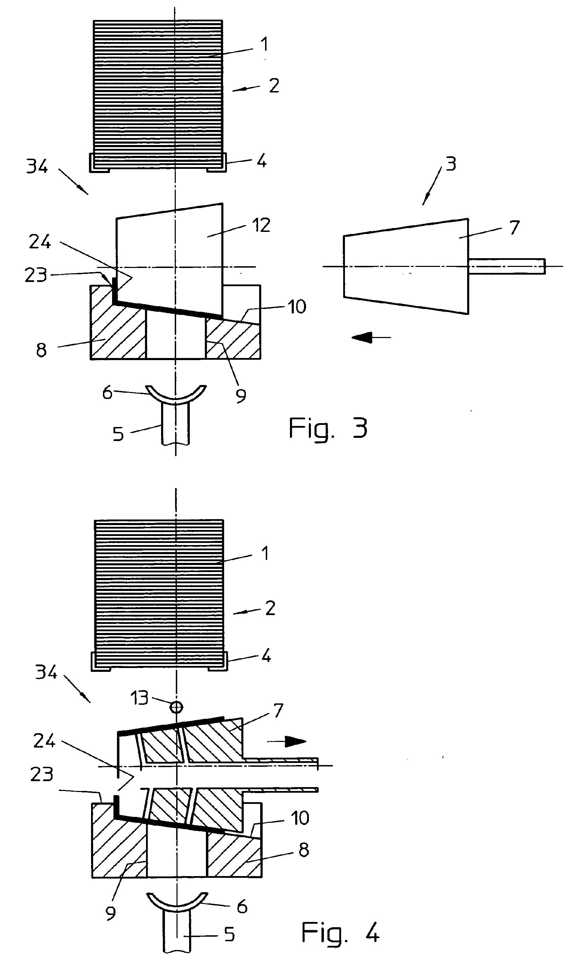

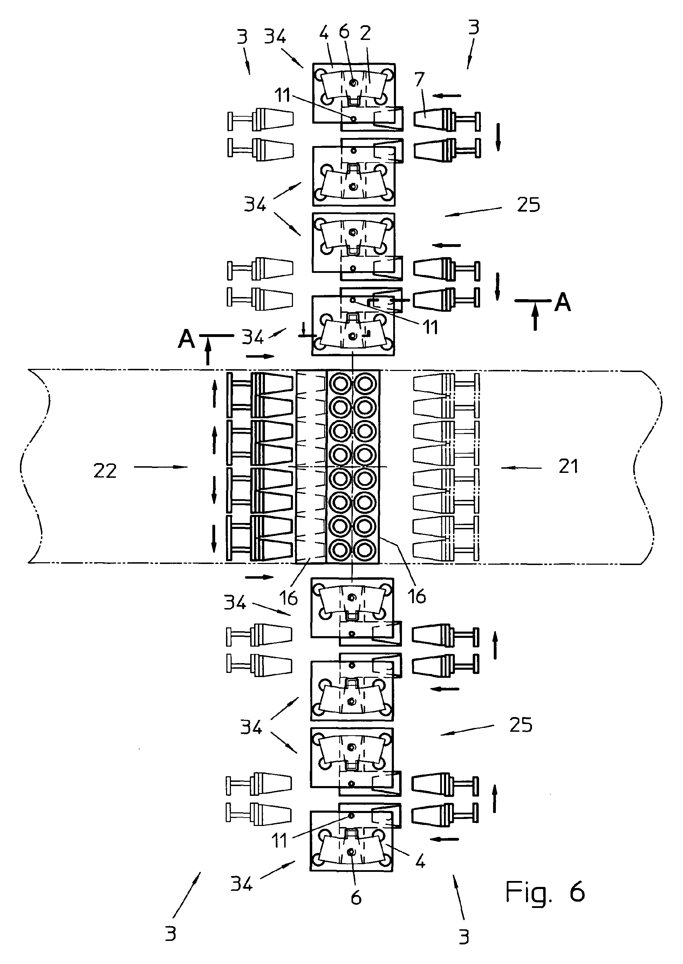

Die Figuren 1 bis 4 zeigen verschiedene Verfahrensstufen, um ein Etikett 1 von der Unterseite eines Etikettenstapels 2, der in einem Abzugsmagazin 4 sitzt, zu entnehmen und auf eine Überführungseinrichtung 3 mit mindestens einem Aufnahmedorn 7 zu bringen, der dann vor ein Unterteil 16 eines Formwerkzeuges fährt und das Etikett 1 in dessen Kavität einlegt. Des weiteren weist die Überführungseinrichtung 3 nicht dargestellte Längsführungen für die Aufnahmedorne 7 und Antriebe zu deren Verschieben gemäß den dargestellten Pfeilen (siehe Figur 6) auf. Unterhalb des Etikettenstapels 2 ist eine Greifeinrichtung 26 angeordnet, bestehend aus einer verschiebbaren Stange 5, einem daran sitzenden Sauger 6 sowie einem nicht dargestellten Antrieb, wobei der Sauger 6 an eine nicht dargestellte Vakuumquelle angeschlossen werden kann. Anstelle eines Saugers 6 können auch zwei kleinere Sauger auf einer Stange 5 angeordnet sein, die dann auch die Funktion einer Verdrehsicherung für das Etikett 1 übernehmen. Dabei fährt die Stange 5 durch eine Vorformeinrichtung 8 hindurch, die dazu einen Durchbruch 9 aufweist. Von der Größe her ist der Durchbruch 9 so gestaltet, dass auch der Sauger 6 hindurchgeführt werden kann, sollte er im Durchmesser größer sein als die Stange 5. Nach dem Ansaugen des untersten Etiketts 1 des Etikettenstapels 2 (Lage Fig. 1) fährt die Stange 5 soweit nach unten, bis das Etikett 1 aufgrund der Ausnehmung 10 in der Vorformeinrichtung 8 im wesentlichen u-förmig vorgeformt wird (Lage Figur 2). Durch Ansaugen über Vakuum, angelegt über Bohrungen 33, oder durch elektrostatische Aufladung wird das Etikett 1 in der Ausnehmung 10 gehalten, sodass der Sauger 6 nach unten aus dem Durchbruch 9 herausgefahren werden kann, sollte dies erforderlich sein. Prinzipiell ist es möglich, die Etiketten 1 in Längsrichtung in den Abzugsmagazinen 4 anzuordnen, also quer zur Darstellung in der Draufsicht in Figur 6. Dann kann man die vorgeformte Etiketten 1 ohne Verschwenken der Vorformeinrichtung 8 aus diesen mit dem Aufnahmedorn 7 abholen. Die Baulänge der Vorrichtung zum Durchführen des Verfahrens baut dann allerdings länger und die Verfahrwege der Aufnahmedorne 7 zum Überführen in das Unterteil 16 werden länger, was sich negativ auf die Taktzeit auswirkt. Außerdem ist das Verfahren dann nur bei einreihigen Formwerkzeugen einsetzbar, weil man ohne Wegschwenken der einen Vorformeinrichtung 8 die andere Vorformeinrichtung 8, die vertikal zur ersten Vorformeinrichtung 8 angeordnet ist, nicht beschicken kann.
In besonderer Ausbildung der Erfindung wird deshalb vorgeschlagen, die Vorformeinrichtung 8 schwenkbar um eine vertikale Achse 11 zu gestalten, sodass die in Figur 3 dargestellte Lage - 90° gedreht - erreicht werden kann. Jetzt wird der Aufnahmedorn 7 der Überführungseinrichtung 3 horizontal verschoben, sodass er im Innern des u-förmig vorgeformten Etiketts 1 zu liegen kommt. Die beiden Schenkel 12 des Etiketts 1 werden anschließend durch eine Einrichtung 13 in Form einer mechanisch wirkenden Einrichtung, einer Blaseinrichtung, oder einer kombinierten Einrichtung 13 so umgelegt, dass sie den Aufnahmedorn 7 umgreifen und durch Anlegen von Vakuum oder durch Aufbringen einer elektrostatischen Ladung wird das Etikett 1 vollflächig an diesem Aufnahmedorn 7 angelegt. Diese Lage ist in Figur 4 dargestellt. Der Aufnahmedorn 7 fährt zurück in Ausgangslage und die Überführungseinrichtung 3 wird senkrecht zu dieser Bewegungsrichtung vor das Unterteil 16 des Formwerkzeuges geführt, um das vorgeformte Etikett 1 in ein Formnest zu übergeben.

Falls auch ein Teilbereich des Behälterbodens mit einem Etikett versehen werden soll ist dies auf einfache Weise realisierbar. Die Vorformeinrichtung 8 weist dazu gemäß einer ersten Ausführungsform eine entsprechende Biegekante 23 auf, die das am Etikett 1 anhängende Bodenetikett 24 umkantet, sodass es am Aufnahmedorn 7 angesaugt werden kann. Dieses Bodenetikett 24 wird beispielsweise mit einem Strichcode versehen und beim Ziehen des Behälters 19 über einen Scanner im Supermarkt wird automatisch der Artikel erfasst.

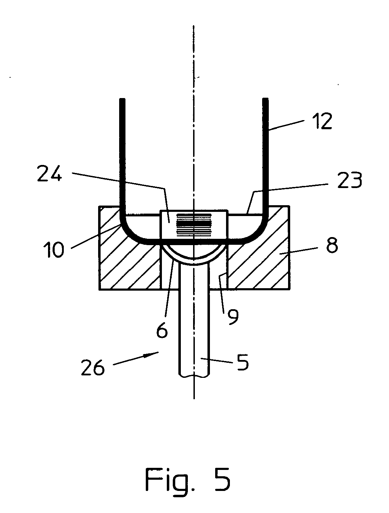

In Figur 5 ist eine andere Gestalt der Ausnehmung 10 in der Vorformeinrichtung 8 dargestellt, die jeweils der Form der herzustellenden Behälter 19 angepasst ist. Diese Gestalt findet Anwendung bei der Etikettierung rechteckiger, an den Ecken verrundeter Behälter 19. Der Aufnahmedorn 7 ist entsprechend gestaltet. Ebenso lassen sich die Etiketten 1 für bombierte Behälter 19 vorformen. Die Gestalt der Ausnehmung 10 ist im wesentlichen eine Halbform der Behälter 19.

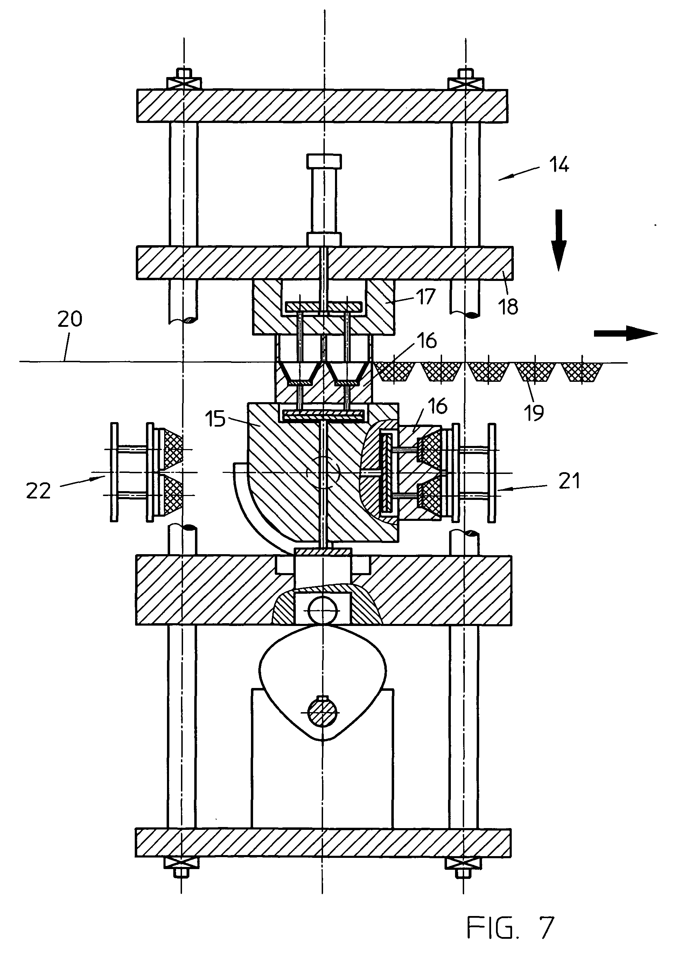

Figur 7 zeigt den Schnitt durch eine Formstation 14 einer Tiefzieh- oder Verpackungsmaschine bei nur formendem Betrieb, bei der das erfindungsgemäße Verfahren pro Formnest Anwendung findet. Sie besteht aus einem heb- und schwenkbaren Formtisch 15, der mindestens ein Unterteil 16 eines Formwerkzeuges trägt, das mit einem Oberteil 17 an einer Querbrücke 18 zusammenwirkt. Der Formtisch 15 kann aber auch - wie dargestellt - zwei Unterteile 16 tragen, die abwechselnd mit dem Oberteil 17 zusammenwirken und um 90° versetzt auf dem Formtisch 15 angeordnet sind. Diese Ausführung hat den Vorteil, dass während des Formens der etikettierten Behälter 19 aus der erwärmten thermoplastischen Kunststofffolie 20 mittels eines der Unterteile 16 das andere Unterteil 16 mit Etiketten 1 bestückt werden kann. Die Taktzahl wird dadurch wesentlich erhöht. Das Zuführen der Etiketten 1 erfolgt dabei an zwei gegenüberliegenden Einlegestationen 21, 22.
In den Figuren 6 und 7 ist das zweireihige Formen von Behältern 19 pro Takt dargestellt, wobei jede Reihe acht Behälter 19 aufweist, sodass also sechzehn Formnester vorliegen, bei denen das Verfahren Anwendung findet. Die Vorrichtung zum Überführen der Etiketten 1 besteht aus insgesamt zwei Vorformeinheiten 25 auf jeder Seite der Formstation 14 (siehe Draufsicht Fig. 6). Jede Vorformeinheit 25 weist vier Vorformstationen 34 mit je einem Abzugsmagazin 4 auf, in dem die Etiketten 1 als Etikettenstapel 2 gestapelt sind. Jedem Etikettenstapel 2 sind auf zwei Ebenen übereinander angeordnete Vorformeinrichtungen 8 zugeordnet. Sie können um eine vertikale Achse 11 geschwenkt werden, sodass sie beide Einlegestationen 21, 22 abwechselnd beschicken können. Dazu ist auf der oberen Ebene eine Vorformeinrichtung 8 vorgesehen, die um insgesamt 180° (2 x 90°) geschwenkt werden kann. Auf der unteren Ebene sind vorzugsweise zwei Vorformeinrichtung 8 unter einem Winkel von 90° zueinander angeordnet und miteinander verbunden, sodass sie gemeinsam um jeweils 90° um die vertikale Achse 11 hin und her geschwenkt werden können.

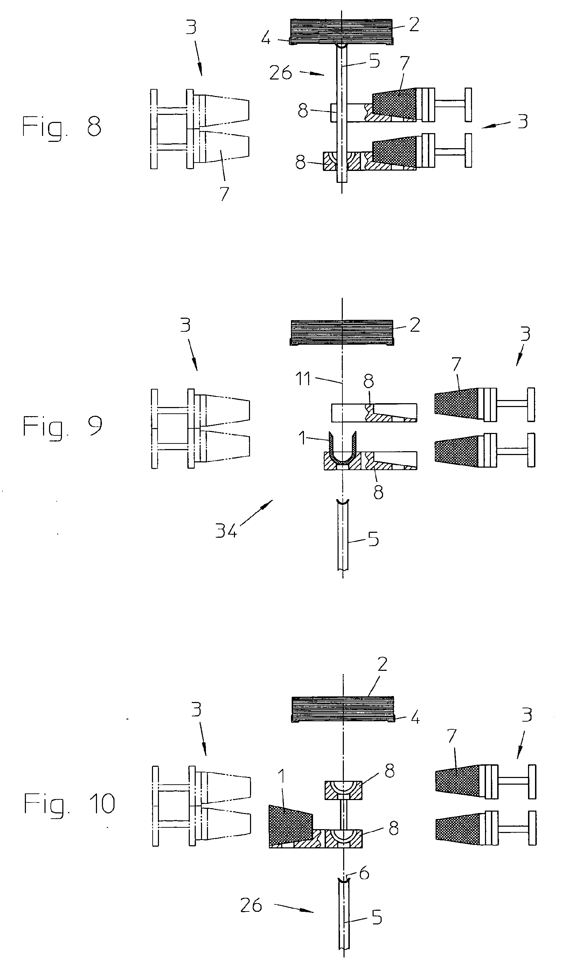

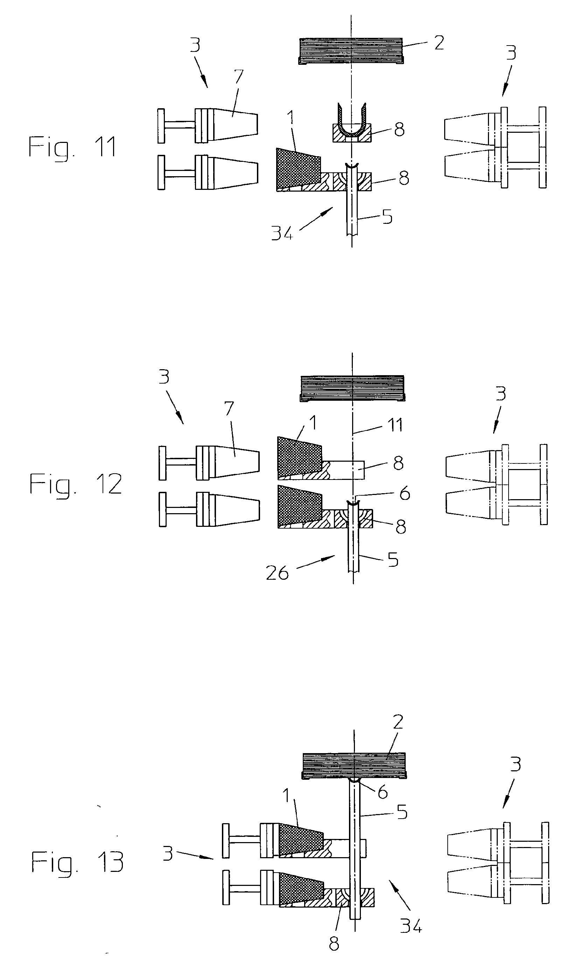

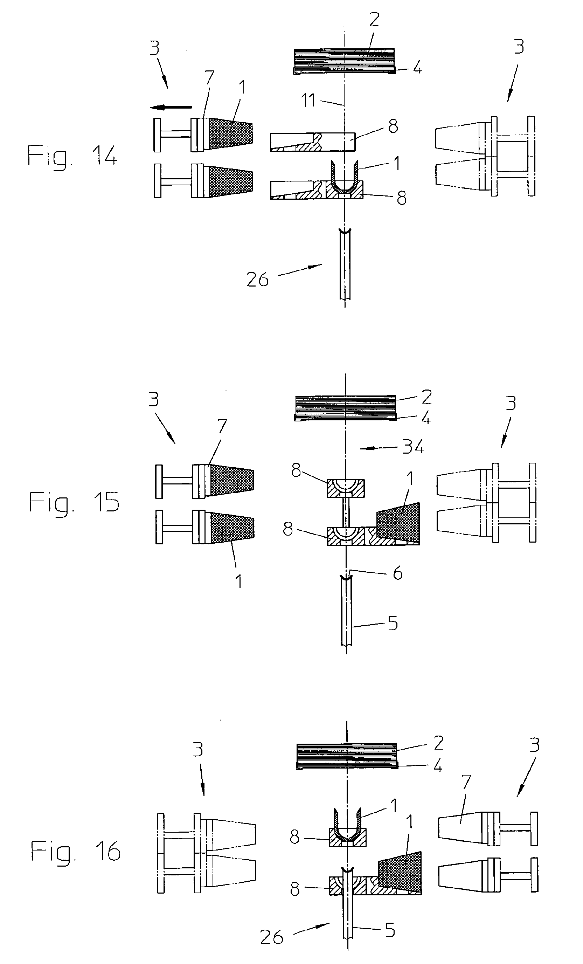

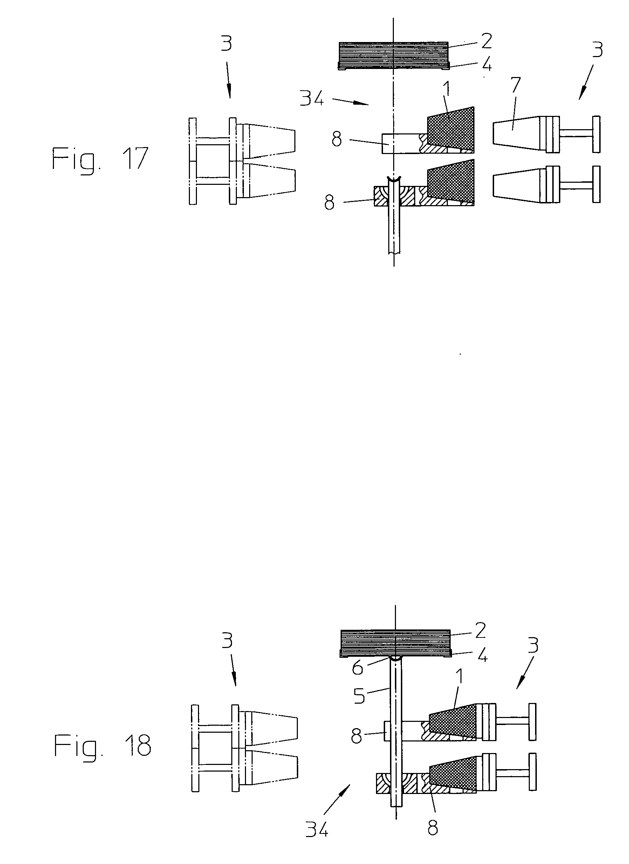

Das Beschicken eines Unterteils 16 erfolgt wie nachfolgend anhand der Figuren 8 - 18, die einen Schnitt entlang der Linie A - A in Fig. 6 darstellen, am Beispiel einer Vorformstation 34 für ein zweireihiges Formwerkzeug beschrieben.
Ausgangslage - Fig. 8 - ist das Abholen der vorgeformten Etiketten 1 durch die Aufnahmedorne 7 auf der rechten Seite jeder Vorformstation 34. Auf der unteren Ebene steht eine Vorformeinrichtung 8 unter dem Etikettenstapel 2. Es folgt:
- Abholen eines Etiketts 1 und dessen Vorformen in der unteren Vor- - formeinheit 8 (Fig. 9).
- Schwenken obere und untere Vorformeinheiten um 90°. Damit kommt die zweite untere, um 90° versetzt angeordnete Vorformeinrichtung 8 unter dem Etikettenstapel 2 zu liegen (Fig. 10).
- Abholen eines Etiketts 1 und Vorformen in der oberen Vorformeinheit 8. Sauger 6 fährt dabei durch die untere Vorformeinrichtung 8 hindurch (Fig. 11) und nach dem Vorformen eines Etiketts 1 aus dieser nach unten heraus.
- Schwenken der oberen Vorformeinheit 8 um 90° (Fig. 12).
- Abholen aller links stehender Etiketten 1 mit den Aufnahmedornen 7, dabei Umlegen der Schenkel 12 und Festhalten (Fig. 13).
- Gegebenenfalls vertikales Verschieben der beiden Aufnahmedorne 7 auf den Formnestabstand in Vorschubrichtung der Kunststofffolie 20 betrachtet.
- Währenddessen Abholen eines Etiketts 1 und Vorformen in der zweiten unteren Vorformeinrichtung 8 (Fig. 14). Einlegen aller Etiketten 1 in das links stehende Unterteil 16, wobei der Abstand der einzelnen Aufnahmedorne 7 vertikal und horizontal auf das Stichmaß des Nestabstandes quer zur Vorschubrichtung der Kunststofffolie 20 mit nicht dargestellten Antrieben und/oder mit Zwangsführungen erfolgt.
- Schwenken obere und untere Vorformeinheiten um 90°. Dabei kommt wieder die erste untere Vorformeinrichtung 8 unter dem Etikettenstapel 2 zu liegen (Fig. 15).
- Abholen eines Etiketts 1 und Vorformen in der oberen Vorformeinheit 8. Sauger 6 fährt dabei durch die untere Vorformeinrichtung 8 hindurch (Fig. 16).
- Schwenken der oberen Vorformeinheit 8 um 90° (Fig. 17).
- Abholen aller rechts stehender Etiketten 1 mit den Aufnahmedornen 7, dabei Umlegen der Schenkel 12 und Ansaugen (Fig. 18). Einlegen aller Etiketten 1 in das rechts stehende Unterteil 16, wobei der Abstand der einzelnen Aufnahmedorne 7 auf das Stichmaß des Nestabstandes mit nicht dargestellten Antrieben und/oder Zwangsführungen erfolgt.

Damit ist wieder die Ausgangslage (Fig. 8) erreicht.

Wenn einreihige Formwerkzeuge mit Etiketten 1 bestückt werden sollen wird nur eine Ebene von Vorformeinrichtungen 8 in den Vorformstationen 34 vorgesehen, wobei diese vorzugsweise wie die untere Ebene bei zweireihigen Formwerkzeugen gestaltet ist, also mit je zwei Vorformeinrichtungen 8 unter 90° zueinander versetzt. Durch diese Gestaltung kann beim Abholen der Etiketten 1 durch die Aufnahmedorne 7 bereits in der anderen Vorformeinrichtung 8 das nächste Etikett 1 vorgeformt werden. Das ermöglicht eine hohe Taktzahl der Tiefzieh- oder Verpackungsmaschine. Dieser Vorteil ist auch bei zweireihigen Formwerkzeugen bei dieser Gestaltung der Vorformstationen 34 mit zwei Vorformeinrichtungen 8 in der unteren Ebene gegeben.

Wenn drei-/vierreihige Formwerkzeuge mit Etiketten 1 bestückt werden sollen ist dies in gleicher Weise möglich, indem drei/vier Vorformeinrichtungen 8 übereinander angeordnet werden. Dabei ist vorzugsweise die untere Vorformeinrichtung 8 wieder doppelt unter 90° angeordnet, während die darüber angeordneten Vorformeinrichtungen 8 einfach ausgeführt sind.

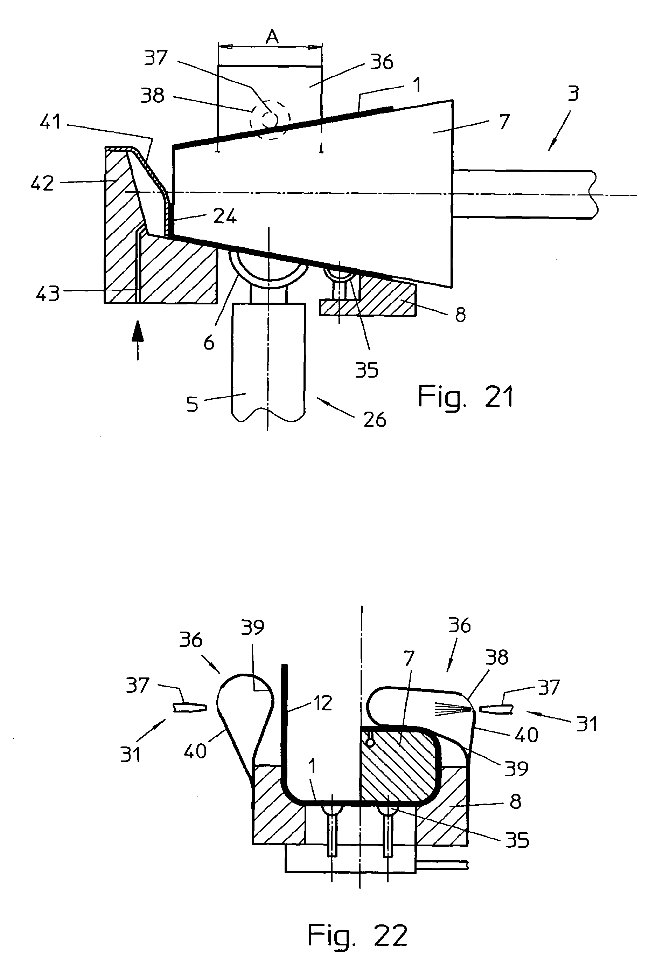

In den Figuren 21 und 22 ist eine Variante einer Vorformeinrichtung 8 mit mehreren vorteilhaften Ausführungen beschrieben. So erfolgt das Ansaugen des Etiketts 1 an den Vorformeinrichtungen 8 durch kleine Sauger 35, die ortsfest an diesen angeordnet sind. Dies hat den Vorteil, dass die Vorformeinrichtung 8 selbst auch aus dünnem Material hergestellt werden kann, z.B. aus Blech. Außerdem sind aufwändige Bohrungen zur Verbindung mit Vakuum nicht erforderlich.
Zum Anlegen eines jeden Schenkels 12 des Etiketts 1 am Aufnahmedorn 7 wird je eine Membran 36 eingesetzt, die seitlich der Vorformeinrichtung 8 angeordnet ist und aus einem elastischen Material wie Vullkollan besteht. Gebildet wird die Membran 36 aus einem Streifen des Materials in der Breite A, der gebogen und mit der Vorformeinrichtung 8 an der Seite verbunden ist. Zum Umlegen des Schenkels 12 wird Blasluft über die als Düse 37 ausgebildete Einrichtung 31 zum Umlenken des Schenkels 12 gegen den inneren Schenkel 39 der Membran 36 geblasen, indem ein Durchbruch 38 im äußeren Schenkel 40 der Membran 36 vorgesehen ist. Diese Ausführung hat den Vorteil, dass die Blasluft zwischen den Schenkeln 39, 40 seitlich ausströmt und die beiden Luftstrahlen sich nach dem Umlegen der beiden Schenkel 12 des Etiketts 1 nicht treffen, was zu ungewünschten Verwirbelungen und Störungen führen kann.
Zum Umbiegen und Anlegen des Bodenetiketts 24 dient eine elastische Membran 41 in der Weise, dass sie oben an einem Steg 42, der Teil der Vorformeinrichtung 8 ist, befestigt ist und durch den Boden der Vorformeinrichtung 8 über eine Bohrung 43 oder über eine Düse Blasluft zugeführt wird. Diese Blasluft wölbt die Membran 41 und drückt das beim Einlegen des Etiketts 1 in die Vorformeinrichtung 8 bereits vorgeknickte Bodenetikett 24 gegen den Aufnahmedorn 7. Auf diese Weise ist eine einfache, störungsfreie Handhabung eines Bodenetiketts 24 gegeben.

In Weiterbildung der Erfindung wird vorgeschlagen, zum Abziehen der Etiketten 1 vom Etikettenstapel 2 Hilfssauger 44 zusätzlich zum Sauger 6 einzusetzen (siehe Figur 1). Diese wirken vorzugsweise an den Ecken der Etiketten 1 und vollziehen nur einen kleinen Hub, wobei sie das Abziehen der Etiketten 1 positiv beeinflussen in dem Sinne, dass die Etiketten 1 zuverlässig vereinzelt werden und nicht mehrere Etiketten 1 zusammenhängen.

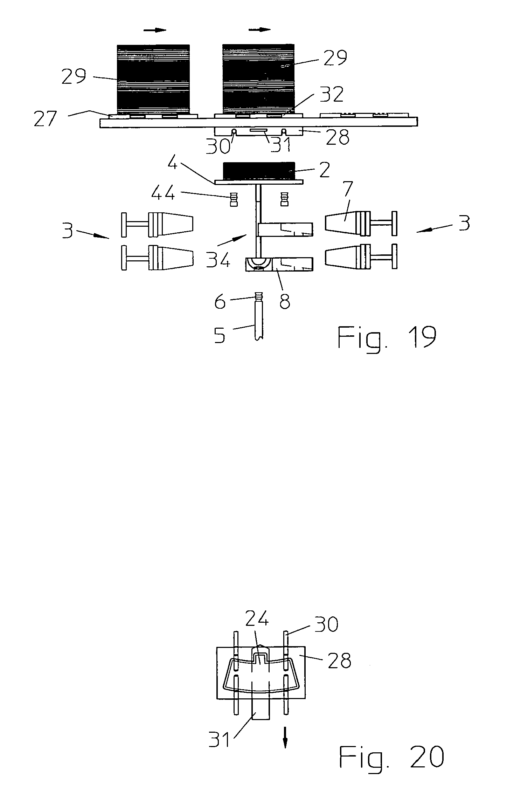

In Weiterbildung der Erfindung wird eine Nachfülleinrichtung für die Etikettenstapel 2 vorgeschlagen, sie ist in den Figuren 19 und 20 dargestellt. Dazu sind neben und oberhalb eines jeden Etikettenstapels 2 ein oder mehrere Nachfüllmagazine 27 angeordnet, die zwischen einer Stellung über dem Etikettenstapel 2 und einer Stellung links bzw. rechts davon verschoben werden können. In den Stellungen links bzw. rechts von den Etikettenstapeln 2 erfolgt das Nachfüllen manuell. Zum Auffüllen der Etikettenstapel 2 in den Abzugsmagazinen 4 aus dem jeweils über ihn geschobenen Nachfüllmagazin 27 dient ein ortsfestes Messermagazin 28. Nach der Freigabe des Etikettenstapels 29 im Nachfüllmagazin 27 - hierzu wird dessen Boden 32 weggezogen - liegt dieser Etikettenstapel 29 auf Haltestangen 30 und auf dem Messer 31 auf, wobei Haltestangen 30 und Messer 31 auf etwa gleicher Höhe angeordnet sind. Das Messer 31 wird herausgezogen, dadurch wölbt sich der Etikettenstapel 29 durch sein Gewicht in der Mitte etwas durch und das Messer 31 kann wieder eingeschoben werden. Durch diese Aktion wird ein wenige mm dicker Etikettenstapel vom Etikettenstapel 29 separiert und dieser fällt nach dem Wegschwenken der Haltestangen 30 auf den Etikettenstapel 2. Es wird auf diese Weise erreicht, dass der Etikettenstapels 2 immer nur wenige Millimeter oder Zentimeter hoch ist, sodass das Abziehen des untersten Etiketts 1 störungsfrei erfolgen kann und kein hohes Gewicht auf ihm lastet. Das Nachfüllen von Etiketten 1 auf diese Weise läuft automatisiert ab, indem bei Erreichen einer Mindesthöhe des Etikettenstapels 2 ein Nachfüllen vom Etikettenstapel 29 auf diese Weise erfolgt.

Beschrieben sind Verfahren und Vorrichtung bei Einsatz in einer Formstation 14 (Figur 7), die nur formend arbeitet. Sie ist entweder Teil einer Verpackungsmaschine, die Behälter 19 werden dann in nachfolgenden Stationen gefüllt, versiegelt und ausgestanzt. Man kann aber auch die etikettierten ungefüllten Behälter 19 mit einer nachfolgenden Stanze austrennen, stapeln und später einer Weiterverwendung zuführen. Ferner ist es möglich, die Formstation als formend und stanzende Station auszubilden, wie sie beispielsweise in der DE 33 46 628 A1 beschrieben ist. Dann werden die etikettierten Behälter 19 nach dem Tiefziehen in der Formstation 14 aus der Kunststofffolie 20 ausgestanzt und vor dem Einlegen des nächsten Etiketts 1 aus dem Unterteil 16 ausgeworfen. Verfahren und Vorrichtung sind auch anwendbar bei einer Formstation, die wie in der DE 32 26 841 C2 beschrieben ausgebildet ist. Bei einer solchen Formstation gibt es eine eigene Entnahmestation für die Behälter 19, sodass das Einlegen von Etiketten 1 und das Entnehmen der Behälter 19 gleichzeitig erfolgen können. Es sind dann allerdings drei Unterteile 16 erforderlich.

Beschrieben sind Verfahren und Vorrichtung anhand einer Entnahme von Etiketten 1 von einem Etikettenstapel 2. Es ist prinzipiell auch möglich, anstelle der Abzugsmagazine 34, die die Etikettenstapel 2 aufnehmen, ein Stanzwerkzeug anzuordnen, das pro Takt aus einem Band Etiketten 1 im Durchfallschnitt in einer entsprechenden Anzahl ausstanzt. In diesem Fall ergreifen die Sauger 6 diese ausgestanzten Etiketten 1 direkt nach dem Ausstanzen von unten durch die Matrize des Stanzwerkzeugs. Die weiteren Verfahrensabläufe sind analog dem beschriebenen Verfahren.

### Bezugszeichentabelle

| | | | |
|---|---|---|---|
| 1 | Etikett | 23 | Biegekante |
| 2 | Etikettenstapel | 24 | Bodenetikett |
| 3 | Überführungseinrichtung | 25 | Vorformeinheit |
| 4 | Abzugsmagazin | 26 | Greifeinrichtung |
| 5 | Stange | 27 | Nachfüllmagazin |
| 6 | Sauger | 28 | Messermagazin |
| 7 | Aufnahmedorn | 29 | Etikettenstapel |
| 8 | Vorformeinrichtung | 30 | Haltestangen |
| 9 | Durchbruch | 31 | Messer |
| 10 | Ausnehmung | 32 | Boden |
| 11 | Vertikale Achse Vorformeinrichtung | 33 | Bohrungen |
| 12 | Schenkel | 34 | Vorformstation |
| 13 | Einrichtung umlegen Schenkel | 35 | Sauger Vorformeinrichtung |
| 14 | Formstation | 36 | Membran |
| 15 | Formtisch | 37 | Düse |
| 16 | Unterteil | 38 | Durchbruch |
| 17 | Oberteil | 39 | inneren Schenkel |
| 18 | Querbrücke | 40 | äußeren Schenkel |
| 19 | Behälter | 41 | Membran |
| 20 | Kunststofffolie | 42 | Steg |
| 21 | Einlegestation | 43 | Bohrung |
| 22 | Einlegestation | 44 | Hilfssauger |

## Patentansprüche

1. Verfahren zum Überführen eines Etiketts (1) von einem Etikettenstapel (2) oder einer Stanzeinrichtung in das Unterteil (16) eines Formwerkzeuges zum Herstellen eines etikettierten Behälters (19) aus einer erwärmten thermoplastischen Kunststofffolie (20), bei dem das Etikett (1) mit einer Greifeinrichtung (26) erfasst, mittels einer Vorformeinrichtung (8) vorgeformt und dann mittels einer Überführungseinrichtung (3) in das Unterteil (16) übergeben wird, **dadurch gekennzeichnet, dass** das Etikett (1) im Zusammenwirken der Greifeinrichtung (26) mit der Vorformeinrichtung (8) im wesentlichen u-förmig vorgeformt, ein Aufnahmedorn (7) der Überführungseinrichtung (3) in das vorgeformte Etikett (1) eingeführt, die freien Schenkel (12) des Etiketts (1) an den Aufnahmedorn (7) angelegt und danach das Etikett (1) auf dem Aufnahmedorn (7) festgehalten wird.

2. Verfahren nach Anspruch 1, **dadurch gekennzeichnet, dass** das Anlegen der Schenkel (12) an dem Aufnahmedorn (7) durch eine mechanische Einrichtung erfolgt.

3. Verfahren nach Anspruch 1, **dadurch gekennzeichnet, dass** das Anlegen der Schenkel (12) an dem Aufnahmedorn (7) durch einen Luftstoß direkt oder indirekt durch Blasen gegen eine elastische Membran (36) erfolgt.

4. Verfahren nach einem der Ansprüche 1 bis 3, **dadurch gekennzeichnet, dass** das Etikett (1) durch Unterdruck an dem Aufnahmedorn (7) festgehalten wird.

5. Verfahren nach einem der Ansprüche 1 bis 3, **dadurch gekennzeichnet, dass** das Etikett (1) durch elektrostatische Aufladung an dem Aufnahmedorn (7) festgehalten wird.

6. Verfahren nach einem der Ansprüche 1 bis 5, **dadurch gekennzeichnet, dass** die Greifeinrichtung (26) das Etikett (1) durch einen oder mehrere Sauger (6) festhält.

7. Verfahren nach einem der Ansprüche 1 bis 6, **dadurch gekennzeichnet, dass** die Etiketten (1) in den Eckenbereichen von Hilfssaugern (44) vor oder mit dem Ergreifen durch die Greifeinrichtung (26) um einen geringen Hub abgezogen werden.

8. Verfahren nach einem der Ansprüche 1 bis 7, **dadurch gekennzeichnet, dass** die Vorformeinrichtung (8) nach dem Aufnehmen eines Etiketts (1) geschwenkt wird, um vor einer versetzt angeordneten Überführungseinrichtung (3) zu stehen.

9. Verfahren nach Anspruch 8, **dadurch gekennzeichnet, dass** die Vorformeinrichtung (8) nach dem Aufnehmen eines Etiketts (1) abwechselnd in zwei Richtungen vor zwei Überführungseinrichtungen (3) geschwenkt wird.

10. Verfahren nach Anspruch 8 oder 9, **dadurch gekennzeichnet, dass** beim Zuführen von Etiketten (1) zu einem einreihig mit Formnestern versehenen Unterteil (16) die Etiketten (1) von der Greifeinrichtung (26) nacheinander in zwei auf einer Ebene unter einem Winkel von 90° angeordnete Vorformeinrichtungen (8) übergeben werden, wobei nach dem Übergeben in die eine Vorformeinrichtung (8) diese zu einer Überführungseinrichtung (3) geschwenkt und während des Aufnehmens dieses Etiketts (1) mittels des Aufnahmedornes (7) bereits das Übergeben eines Etiketts (1) in die zweite Vorformeinrichtung (8) erfolgt.

11. Verfahren nach Anspruch 8 oder 9, **dadurch gekennzeichnet, dass** bei mehrreihig mit Formnestern versehenen Unterteilen (16) die Etiketten (1) von der Greifeinrichtung (26) nacheinander in mehrere übereinander angeordnete Vorformeinrichtungen (8) übergeben werden, wobei nach dem Übergeben in die oberste Vorformeinrichtung (8) diese geschwenkt und dann das Übergeben in die nächstfolgende(n) Vorformeinrichtung(en) (8) und deren Schwenken erfolgt.

12. Verfahren nach Anspruch 11, **dadurch gekennzeichnet, dass** beim Zuführen von Etiketten (1) zu einem mehrreihig mit Formnestern versehenen Unterteil (16) bereits während des Übergebens der Etiketten (1) auf die Aufnahmedorne (7) das Ergreifen eines Etiketts (1) durch die Greifeinrichtung (26) und das Übergeben in eine zweite, unter einem Winkel von 90° angeordnete, Vorformeinrichtung (8) in der untersten Ebene erfolgt.

13. Verfahren nach einem der Ansprüche 1 bis 12, **dadurch gekennzeichnet, dass** ein mit dem Etikett (1) verbundenes Bodenetikett (24) in der Weise an den Aufnahmedorn (7) angelegt wird, dass ein Luftstoß eine an der Vorformeinrichtung (8) befestigte elastische Membran (41) bewegt.

14. Vorrichtung zum Überführen eines Etiketts (1) von einem in einem Abzugsmagazin (4) angeordneten Etikettenstapel (2) oder von einer Stanzeinrichtung in das Unterteil (16) eines Formwerkzeuges zum Herstellen eines etikettierten Behälters (19) aus einer erwärmten thermoplastischen Kunststofffolie (20), mit einer Greifeinrichtung (26) für das Etikett (1), einer Vorformeinrichtung (8) zum Vorformen des Etiketts (1) in eine im wesentlichen u-förmige Gestalt und einer Überführungseinrichtung (3) mit einem Aufnahmedorn (7), der das Etikett (1) von der Vorformeinrichtung (8) aufnimmt und in das Unterteil (16) überführt, **dadurch gekennzeichnet, dass** die Greifeinrichtung (26) durch diese Vorformeinrichtung (8) hindurchführbar ist, wobei beide im Zusammenwirken das Vorformen des Etiketts (1) vornehmen, und dass eine Einrichtung (13) zum Umlegen der Schenkel (12) des vorgeformten Etiketts (1) um den Aufnahmedorn (7) vorgesehen ist.

15. Vorrichtung nach Anspruch 14, **dadurch gekennzeichnet, dass** die Vorformeinrichtung (8) horizontal schwenkbar ausgebildet ist.

16. Vorrichtung nach Anspruch 15, **dadurch gekennzeichnet, dass** sie zwei Überführungseinrichtungen (3) aufweist und die Vorformeinrichtung (8) so ausgebildet ist, dass sie abwechselnd vor diese geschwenkt werden kann.

17. Vorrichtung nach Anspruch 15 oder 16, **dadurch gekennzeichnet, dass** zum Beschicken eines mit einer Reihe von Formnestern versehenen Unterteils (16) pro Vorformstation (34) zwei um 90° versetzt zueinander angeordnete Vorformeinrichtungen (8) vorgesehen sind, die mit einer Greifeinrichtung (26) zusammenwirken.

18. Vorrichtung nach Anspruch 15 oder 16, **dadurch gekennzeichnet, dass** zum Beschicken eines mit mehreren Reihen von Formnestern versehenen Unterteils (16) mehrere Vorformeinrichtungen (8) pro Vorformstation (34) übereinander angeordnet sind, die mit einer Greifeinrichtung (26) zusammenwirken.

19. Vorrichtung nach Anspruch 18, **dadurch gekennzeichnet, dass** auf der untersten Ebene zwei um 90° versetzt zueinander angeordnete Vorformeinrichtungen (8) vorgesehen sind, die mit der Greifeinrichtung (26) zusammenwirken.

20. Vorrichtung nach einem der Ansprüche 14 bis 19, **dadurch gekennzeichnet, dass** an der Vorformeinrichtung (8) Sauger (35) zum Festhalten der vorgeformten Etiketten (1) vorgesehen sind.

21. Vorrichtung nach einem der Ansprüche 14 bis 20, **dadurch gekennzeichnet, dass** die Greifeinrichtung (26) mit einem oder mehreren, mit einer Vakuumeinrichtung verbindbaren Saugern (6) versehen ist.

22. Vorrichtung nach einem der Ansprüche 14 bis 21, **dadurch gekennzeichnet, dass** im Bereich des Abzugsmagazins (4) Hilfssauger (44) angeordnet sind, die um einem geringen Hub verschiebbar ausgebildet sind.

23. Vorrichtung nach einem der Ansprüche 14 bis 22, **dadurch gekennzeichnet, dass** die Einrichtung zum Umlegen der Schenkel (12) aus zwei seitlich an der Vorformeinrichtung (8) angeordneten Membranen (36) besteht, gegen die eine an Druckluft anschließbare Düse (37) gerichtet ist.

24. Vorrichtung nach Anspruch 23, **dadurch gekennzeichnet, dass** im äußeren Schenkel (40) der Membran (36) ein Durchbruch (38) vorgesehen ist, sodass der Luftstrahl der Düse (37) gegen den inneren Schenkel (39) der Membran (36) gerichtet wird.

25. Vorrichtung nach einem der Ansprüche 14 bis 24, **dadurch gekennzeichnet, dass** zum Anlegen eines mit dem Etikett (1) verbundenen Bodenetiketts (24) am Aufnahmedorn (7) an der Vorformeinrichtung (8) eine Membran (41) befestigt ist, die über einem Luftstoß auslenkbar gestaltet ist.

26. Vorrichtung nach einem der Ansprüche 14 bis 25, **dadurch gekennzeichnet, dass** in Verschieberichtung der Überführungseinrichtung (3) mehrere Aufnahmedorne (7) zum Aufnehmen von vorgeformten Etiketten (1) hintereinander angeordnet sind, die mit je einer Vorformeinrichtung (8) zusammenarbeiten.

27. Vorrichtung nach Anspruch 26, **dadurch gekennzeichnet, dass** der Abstand der Aufnahmedorne (7) in Verschieberichtung veränderbar ist.

28. Vorrichtung nach einem der Ansprüche 14 bis 27, **dadurch gekennzeichnet, dass** über jedem Abzugsmagazin (4) zum Aufnehmen der Etikettenstapel (2) ein horizontal verschiebbares Nachfüllmagazin (27) mit einem Etikettenstapel (29) zum Nachfüllen des Etikettenstapels (2) angeordnet ist.

29. Vorrichtung nach Anspruch 28, **dadurch gekennzeichnet, dass** zwischen dem Nachfüllmagazin (27) und dem Abzugsmagazin (4) ein Messermagazin (28) angeordnet ist, das ein horizontal verschiebbares Messer (31) und wegfahrbare Haltestangen (30) aufweist.

30. Vorrichtung nach einem der Ansprüche 14 bis 29, **dadurch gekennzeichnet, dass** die Vorrichtung aus zwei Vorformeinheiten (25) - eine Vorformeinheit (25) auf jeder Seite der Formstation (14) - besteht, wobei jede Vorformeinheit (25) eine oder zwei Überführungseinrichtungen (3) aufweist.
